# EUROPEAN PATENT APPLICATION

(11) **EP 0 565 283 A1**
(43) Date of publication of application: **13.10.1993**
(21) Application number: 93302370.7
(22) Date of filing: 26.03.1993
(51) Int. Cl.: H04N 1/46

(54) **Apparatus and method for tone and color reproduction control**

(30) Priority: 29.03.1992 IL 101408
(71) Applicant: SCITEX CORPORATION LTD., Herzliya 46103 (IL)
(72) Inventor: Duenyas, Isak, Tel Aviv 63029 (IL); Baron, Eliezer, B-1180 Brussels (BE)
(74) Representative: Hillier, Peter

(57) **Abstract**

A method for employing an existing color space as a color independent color space including the steps of calibrating a color transformation unit to transform a first color processing device-dependent digital representation of a color image generated by a first color processing device into a first device-independent digital representation within an existing color space, and calibrating the color transformation unit to transform a second color processing device-dependent digital representation of the color image generated by a second color processing device into a second device-independent digital representation within the existing color space, wherein the first and second device-independent digital representations of the color image are substantially identical within the limitations of the first and second color processing devices.

## Description

### FIELD OF THE INVENTION

The present invention relates to methods and apparatus for tone and color reproduction control in graphic arts.

### BACKGROUND OF THE INVENTION

Color matching and good quality color reproduction are important requirements of a successful color prepress process. State of the art techniques for tone and color reproduction control in graphic arts are described in Published European Applications 91300904.9 and 91300905.6, both to Scitex Corporation.

Before color electronic prepress systems (CEPSs) were known, drum scanners were employed to control output color at the prepress stage. The scanner operator was obliged to adjust a multiplicity of controls in order to achieve a desired color by virtue of a trial and error process based upon his skill and experience.

Later, drum scanners were equipped with computers which stored and allowed subsequent duplication of scanner setups and preview stations which allowed color to be previewed before films were outputted. Prepress workstations at this level of technology allow color transformations to be made for a specific, individual output device. These color transformations are usually proprietary, marketed for the specific output devices by the respective vendors.

Still later, desktop publishing systems were developed which provided good quality color reproduction. In these systems, "device-independent color" or "color portabiliy" became a particularty desired trait, due in part to the wide variety of input and output devices available for "mixing and matching". State of the art "device-independent" products receive a device-dependent digital representation of a color image, a characterization of the input device and display device employed to generate the device-dependent digital representation and a characterization of an output device which it is desired to use in order to provide an analog representation of the device-dependent digital representation. The device-independent product converts the device-dependent digital representation into a color space which is designed to be device-independent, such as an "appearance colors" space. Standards have been developed for appearance colors, including CIE and YCC.

"Appearance colors" color spaces are psychophysical in nature because they are generally designed to take into account the visual perception capabilities of the human eye. Generally, color spaces may be categorized as either colorimetric or noncolorimetric.

The concept of device independence is discussed in the Dunn Report, X(2), February 1992 and in the Seybold Report on Desktop Publishing, November 1, 1991.

Use of a colorimeter in mapping a color gamut and printing digital color images, using human aesthetic judgement as a criterion, is disclosed in Stone et al, "Color gamut mapping and the printing of digital color images", ACM Transactions on Graphics, 7(4), October 1988, pp. 249 - 292.

United States Patent 4,500,919 to Schreiber discloses a system for producing color reproductions of an image in which an operator may interactively manipulate a display of the scanned image in order to introduce aesthetic, psychophysically referenced corrections therein.

As a result of the considerable experience which has accumulated in tone and color reproduction, color spaces have been developed which are particularly suited to tone and color reproduction. An example of a color space which is particularly suited to high-end tone and color reproduction is the Scitex Smart Scanner color space.

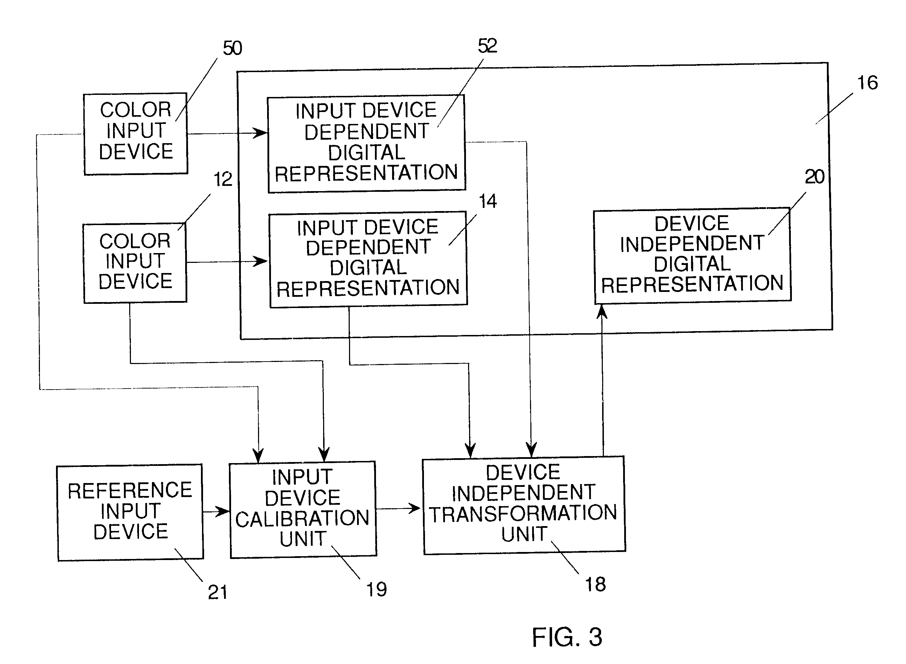

U. S. Patent 4,941,038 to Walowit describes a method for processing color image data in which an input device is calibrated to an intermediate color space and an output device is calibrated to the intermediate color space. During the conversion process, the image data is processed to compensate for gamut mismatch. The most relevant portions of Walowit are believed to be Figs. 3 and 4 and, in the description, column 2, lines 20 - 68 and column 7, lines 15 - 60.

### SUMMARY OF THE INVENTION

The present invention seeks to provide improved methods and apparatus for tone and color reproduction control in graphic arts.

The present invention also seeks to provide a device-independent, color-portable color reproduction process which includes the step of representing a color image in an existing, noncolorimetric, high-end device-independent color space.

There is thus provided in accordance with a preferred embodiment of the present invention a method for employing an existing color space as a color independent color space including the steps of calibrating a color transformation unit to transform a first color processing device-dependent digital representation of a color image generated by a first color processing device into a first device-independent digital representation within an existing color space, and calibrating the color transformation unit to transform a second color processing device-dependent digital representation of the color image generated by a second color processing device into a second device-independent digital representation within the existing color space, wherein the first and second device-independent digital representations of the color image are substantially identical within the limitations of the first and second color processing devices.

There is also provided in accordance with an additional embodiment of the present invention a method for employing an existing color space as a color independent color space including the steps of calibrating a color transformation unit to transform a device-independent digital representation of a color image within an existing color space into a first output device-dependent digital representation suitable for output by a first color output device, and calibrating the color transformation unit to transform the device-independent digital representation of the color image within the existing color space into a second output device-dependent digital representation suitable for output by a second color output device, wherein an analog representation of the color image generated from the first output device-dependent digital representation by the first output device is substantially identical in appearance, within the limitations of the first and second output devices, to an analog representation of the color image generated from the second output device-dependent digital representation by the second output device.

There is further provided in accordance with a further preferred embodiment of the present invention a method for employing a noncolorimetric color space as a color independent color space including the steps of calibrating a color transformation unit to transform a first color processing device-dependent digital representation of a color image generated by a first color processing device into a first device-independent digital representation within a noncolorimetric color space, and calibrating the color transformation unit to transform a second color processing device-dependent digital representation of the color image generated by a second color processing device into a second device-independent digital representation within the noncolorimetric color space, wherein the first and second device-independent digital representations of the color image are substantially identical, within the limitations of the first and second color processing devices.

Further in accordance with a preferred embodiment of the present invention, the method also includes the step of generating an analog representation of the color image from t he first output device-dependent digital representation using the first output device.

There is also provided in accordance with a further preferred embodiment of the present invention, a method for employing an existing color space to mix-and-match at least one color input device and at least one color output device including the steps of calibrating a color transformation unit to transform at least one input device-dependent digital representation of at least one color images respectively generated by the at least one color input devices respectively from a first analog representation of the at least one color images respectively into a device-independent digital representation within the existing color space, and calibrating the color transformation unit to transform the device-independent digital representation of a color image within the existing color space into at least one output device-dependent digital representation suitable for output by the at least one color output device, wherein at least one analog representations of the color image generated from the at least one output device-dependent digital representations respectively by the at least one output devices respectively is substantially identical in appearance to the first analog representation of the color image, within the limitations of the at least one color input device and the at least one color output device.

Further in accordance with a preferred embodiment of the present invention, the at least one input device includes a plurality of input devices.

Still further in accordance with a preferred embodiment of the present invention, the at least one output device includes a plurality of output devices.

Additionally in accordance with a preferred embodiment of the present invention, the method includes the steps of calibrating the color transformation unit to transform at least one of the first and second device-independent digital representations of the color image within the existing color space into an output device-dependent digital representation suitable for output by a color output device, and employing the output device to generate an analog representation of the color image from the output device-dependent digital representation.

Additionally in accordance with a preferred embodiment of the present invention, the input device includes a desktop input device.

Further in accordance with a preferred embodiment of the present invention, the output device includes a desktop output device.

Still further in accordance with a preferred embodiment of the present invention, the color image includes any individual one of a broad spectrum of color images.

Additionally in accordance with a preferred embodiment of the present invention, the color image includes any individual one of a group of color images including substantially all color images.

Further in accordance with a preferred embodiment of the present invention, the existing color space includes a high-end color space in which high-quality color transformations may be carried out, such as the Scitex Smart Scanner color space.

Still further in accordance with a preferred embodiment of the present invention, the device-independent digital representation is provided by performing the step of calibrating the color transformation unit to transform an input device-dependent digital representation of a color image generated by a color input device into a device-independent digital representation within the existing color space.

Additionally in accordance with a preferred embodiment of the present invention, the color space includes an industry accepted proprietary color space.

Still further in accordance with a preferred embodiment of the present invention, the color space includes a non-colorimetric color space.

There is also provided in accordance with a further preferred embodiment of the present invention, a method for employing a noncolorimetric color space as a color independent color space including the steps of calibrating a color transformation unit to transform a device-independent digital representation of a color image within a noncolorimetric color space into a first output device-dependent digital representation suitable for output by a first color output device, and calibrating the color transformation unit to transform the device-independent digital representation of the color image within the noncolorimetric color space into a second output device-dependent digital representation suitable for output by a second color output device, wherein an analog representation of the color image generated from the first output device-dependent digital representation by the first output device is substantially identical in appearance, within the limitations of the first and second output devices, to an analog representation of the color image generated from the second output device-dependent digital representation by the second output device.

There is further provided in accordance with another preferred embodiment of the present invention, a method for employing a noncolorimetric color space to mix-and-match at least one color input device and at least one color output device including the steps of calibrating a color transformation unit to transform at least one input device-dependent digital representation of at least one color images respectively generated by the at least one color input devices respectively from a first analog representation of the at least one color images respectively into a device-independent digital representation within a noncolorimetric color space, and calibrating the color transformation unit to transform the device-independent digital representation of a color image within the noncolorimetric color space into at least one output device-dependent digital representation suitable for output by the at least one color output device, wherein at least one analog representations of the color image generated from the at least one output device-dependent digital representations respectively by the at least one output devices respectively are substantially identical in appearance, within the limitations of the at least one input device and the at least one output device, to the first analog representation of the color image.

There is additionally provided in accordance with another preferred embodiment of the present invention a method for determining characteristics of a target color input device relative to a reference color input device including the steps of employing the target color input device to read an analog database, thereby to generate a first digital representation of the analog database, and comparing the first digital representation of the analog database to a digitally stored second digital representation of the analog database, wherein the second digital representation of the analog database was generated by employing the reference color input device to read the analog database.

There is also provided in accordance with a further preferred embodiment of the present invention, a method for replacing a first color independent color space employed in a color independent color processing system with a second color independent color space, the color independent color processing system including a color transformation unit for linking a plurality of color processing devices to the first color independent color space, the method including the step of constructing a transformation for transforming digital representations of color images in an individual one of the first and second color independent color spaces into digital representations in the other one of the first and second color independent color spaces.

Further in accordance with a preferred embodiment of the present invention, at least one of the first and second color processing devices includes a color input device.

Still further in accordance with a preferred embodiment of the present invention, at least one of the first and second color processing devices includes a creative device for synthetically generating digital representations of color images.

There is also provided in accordance with yet a further preferred embodiment of the present invention, apparatus for employing an existing color space as a color independent color space including apparatus for calibrating a color transformation unit to transform a first color processing device-dependent digital representation of a color image generated by a first color processing device into a first device-independent digital representation within an existing color space, and apparatus for calibrating the color transformation unit to transform a second color processing device-dependent digital representation of the color image generated by a second color processing device into a second device-independent digital representation within the existing color space, wherein the first and second device-independent digital representations of the color image are substantially identical, within the limitations of the first and second color processing devices.

There is further provided in accordance with another preferred embodiment of the present invention, apparatus for employing an existing color space as a color independent colorspace including apparatus for calibrating a color transformation unit to transform a device-independent digital representation of a color image within an existing color space into a first output device-dependent digital representation suitable for output by a first color output device, and apparatus for calibrating the color transformation unit to transform the device-independent digital representation of the color image within the existing color space into a second output device-dependent digital representation suitable for output by a second color output device, wherein an analog representation of the color image generated from the first output device-dependent digital representation by the first output device is substantially identical in appearance, within the limitations of the first and second output devices, to an analog representation of the color image generated from the second output device-dependent digital representation by the second output device.

There is additionally provided in accordance with a further preferred embodiment of the present invention, apparatus for employing an existing color space to mix-and-match at least one color input device and at least one color output device, the apparatus including apparatus for calibrating a color transformation unit to transform at least one input device-dependent digital representation of at least one color images respectively generated by the at least one color input devices respectively from a first analog representation of the at least one color images respectively into a device-independent digital representation within the existing color space, and apparatus for calibrating the color transformation unit to transform the device-independent digital representation of a color image within the existing color space into at least one output device-dependent digital representation suitable for output by the at least one color output device, wherein at least one analog representations of the color image generated from the at least one output device-dependent digital representations respectively by the at least one output devices respectively are substantially identical in appearance, within the limitations of the at least one input device and the at least one output device, to the first analog representation of the color image.

There is additionally provided in accordance with still a further preferred embodiment of the present invention, apparatus for employing a noncolorimetric color space as a color independent color space including apparatus for calibrating a color transformation unit to transform a first color processing device-dependent digital representation of a color image generated by a first color processing device into a first device-independent digital representation within a non- colorimetric color space, and apparatus for calibrating the color transformation unit to transform a second color processing device-dependent digital representation of the color image generated by a second color processing device into a second device-independent digital representation within the noncolorimetric color space, wherein the first and second device-independent digital representations of the color image are substantially identical, within the limitations of the first and second color processing devices.

There is additionally provided in accordance with a further preferred embodiment of the present invention, apparatus for employing a noncolorimetric color space as a color independent color space including apparatus for calibrating a color transformation unit to transform a device-independent digital representation of a color image within a noncolorimetric color space into a first output device-dependent digital representation suitable for output by a first color output device, and apparatus for calibrating the color transformation unit to transform the device-independent digital representation of the color image within the noncolorimetric color space into a second output device-dependent digital representation suitable for output by a second color output device, wherein an analog representation of the color image generated from the first output device-dependent digital representation by the first output device is substantially identical in appearance, within the limitations of the first and second output devices, to an analog representation of the color image generated from the second output device-dependent digital representation by the second output device.

There is also provided in accordance with a further preferred embodiment of the present invention, apparatus for employing a noncolorimetric color space to mix-and-match at least one color input device and at least one color output device, the apparatus including apparatus for calibrating a color transformation unit to transform at least one input device-dependent digital representation of at least one color images respectively generated by the at least one color input devices respectively from a first analog representation of the at least one color images respectively into a device-independent digital representation within a noncolorimetric color space, and apparatus for calibrating the color transformation unit to transform the device-independent digital representation of a color image within the noncolorimetric color space into at least one output device-dependent digital representation suitable for output by the at least one color output device, wherein at least one analog representations of the color image generated from the at least one output device-dependent digital representations respectively by the at least one output devices respectively are substantially identical in appearance, within the limitations of the at least one color input device and the at least one color output device, to the first analog representation of the color image.

There is further provided in accordance with another preferred embodiment of the present invention, apparatus for determining characteristics of a target color input device relative to a reference color input device including apparatus for employing the target color input device to read an analog database, thereby to generate a first digital representation of the analog database, and apparatus for comparing the first digital representation of the analog database to a digitally stored second digital representation of the analog database, wherein the second digital representation of the analog database was generated by employing the reference color input device to read the analog database.

There is also provided in accordance with yet a further preferred embodiment of the present invention, apparatus for replacing a first color independent color space employed in a color independent color processing system with a second color independent color space, the color independent color processing system including a color transformation unit for linking a plurality of color processing devices to the first color independent color space, the apparatus including apparatus for constructing a transformation for transforming digital representations of color images in an individual one of the first and second color independent color spaces into digital representations in the other one of the first and second color independent color spaces.

Further in accordance with a preferred embodiment of the present invention, the first step of calibrating includes the step of storing a first transformation for transforming the first device-dependent digital representation and the second step of calibrating includes the step of additionally storing a second transformation for transforming the second device-dependent digital representation.

Still further in accordance with a preferred embodiment of the present invention, the first step of calibrating includes the step of storing a first transformation for transforming into the first output device-dependent digital representation and the second step of calibrating includes the step of also storing a second transformation for transforming into the second output device-dependent digital representation.

Additionally in accordance with a preferred embodiment of the present invention, the first step of calibrating includes the step of storing a first transformation for transforming the input device-dependent digital representation and the second step of calibrating includes the step of additionally storing a second transformation for transforming the device-independent digital representation.

Still further in accordance with a preferred embodiment of the present invention, the steps of storing each include the step of storing a transformation as a LUT.

Additionally in accordance with a preferred embodiment of the present invention, the color transformation unit is operative to transform a plurality of second color processing device-dependent digital representations of the color image generated respectively by a corresponding plurality of second color processing devices into a corresponding plurality of second device-independent digital representations, respectively, within the color space which are all substantially identical to the first device-independent digital representation within the limitations of the color processing devices.

Further in accordance with a preferred embodiment of the present invention, the color transformation is operative to transform the device-independent representation into a plurality of second output device-dependent digital representations suitable for output by a corresponding plurality of second output devices, respectively, and wherein the corresponding plurality of analog representations generated from the plurality of second output device-dependent digital representations by the corresponding plurality of second output devices respectively are each substantially identical in appearance to the analog representation generated from the first output device-dependent digital representation by the first output device, within the limitations of the output devices.

Still further in accordance with a preferred embodiment of the present invention, the at least one device-dependent digital representation includes a plurality of device-dependent digital representations, the at least one color input device includes a plurality of color input devices and the at least one color output device includes a plurality of color output devices.

### BRIEF DESCRIPTION OF THE DRAWINGS

The present invention will be understood and appreciated from the following detailed description, taken in conjunction with the drawings in which:
Fig. 1 is a block diagram of color reproduction apparatus constructed and operative in accordance with a first preferred embodiment of the present invention;
Fig. 2 is a block diagram of color reproduction apparatus constructed and operative in accordance with a second preferred embodiment of the present invention; and
Fig. 3 is a block diagram of color reproduction apparatus constructed and operative in accordance with a third preferred embodiment of the present invention.

### DETAILED DESCRIPTION OF PREFERRED EMBODIMENTS

The present specification is to be understood with reference to the following definitions:
Analog representation of a color image: A representation of a color image which resembles the color image or is perceivable by the human eye as a color image. The representation may appear upon a transparency, photograph, CRT display, printed page or other medium.

Digital representation of a color image: A representation of a color image which is expressed in discrete symbols, such as numerical symbols. Acommon digital representation of a color image is a digital file comprising a plurality of numerical values corresponding to a plurality of pixels in which the color image has been divided, each such numerical value representing some aspect pertaining to the colored appearance of the corresponding pixel.

Color processing apparatus: Apparatus which inputs a first digital or analog representation of a color image and converts it into a second digital or analog representation thereof.

Color reading apparatus or color input device: Color processing apparatus which inputs an analog representation of a color image and converts it into a digital representation of the color image. For example, electronic color separation scanners such as drum orflatbed scanners, colorimeters, spectrophotometers, densitometers, video or still video cameras, and image digitizers.

Color writing apparatus or color output device: Color processing apparatus which inputs a digital representation of a color image and converts it into an analog representation of the color image. For example, conventional, offset, gravure or other printing apparatus employing inks; conventional or direct digital proofing machines; plotters, such as internal orexter- nal drum plotters or fiat bed plotters or vector plotters, or color recorders which expose photographic materials; imagesetters such as internal or external drum imagesetters or flatbed imagesetters; electrostatic printing systems employing powder colorants; color monitors; color CRT displays.

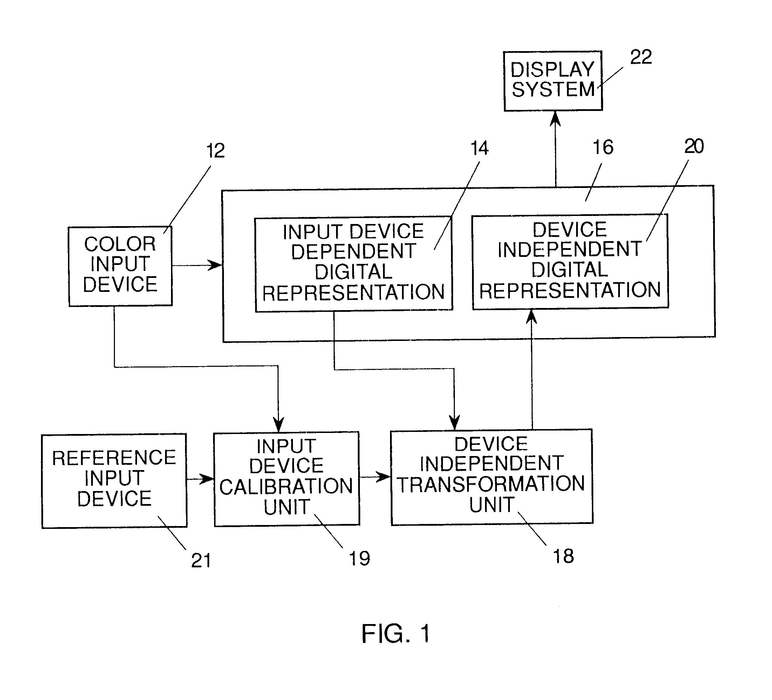

Reference is now made to Fig. 1 which illustrates a color reproduction system constructed and operative in accordance with a preferred embodiment of the present invention. The color reproduction system of Fig. 1 includes at least one color input device 12. Any suitable color input device may be employed, such as an SG 608, commercially available from Dai- nippon Screen. Color input device 12 reads an analog representation of a color image and generates an input device-dependent digital representation 14 of the color image. The digital representation 14 is input device-dependent in the sense that, normally, different digital representations would result if different color input devices 12 are used.

Also provided is a digital storage unit 16 such as a magnetic disk for storing digital representations of the color image such as digital representation 14.

A device-independent transformation unit 18 is operative to transform input device-dependent digital representation 14 into a device-independent digital representation 20 of the color image defined within an existing color space, preferably an existing high-end color space such as the Scitex Smart Scanner color space. Digital representation 20 may be stored in digital storage unit 16. Transformation unit 18 may be implemented using the VLSI whose netlist is appended to Published European Application No. 91300905.6. The transformation which transformation unit 18 applies to input device-dependent digital representation 14 may be generated by an input device calibration unit 19.

Input device calibration unit 19 is preferably operative in conjunction with a reference color input device 21, such as a Smart Scanner, commercially available from Scitex Corporation, Herzlia, Israel. Reference input device 21 serves as a reference for calibrating color input device 12. Preferably, a target or "database" transparency is scanned by reference input device 21 as well as by input device 12. The two resulting digital representations are employed by calibration unit 19 to generate a calibrating transformation which may be used by transformation unit 18 to transform a device-dependent digital representation 14, generated by the particular input device 12, into a device-independent digital representation 20.

Preferably, a digital representation of the database as scanned by reference input device 21 is stored in digital memory in order to facilitate repeated use of the apparatus of Fig. 3 for more than one color input device 50, without repeatedly employing reference input device 21 to scan the database.

The method employed by calibration unit 19 in order to generate the calibrating transformation is disclosed in Published European Application 91300904.9. The "database" scanned by input devices 12 and 21 may comprise the database described in Published European Application 91300904.9 or alternatively may comprise a commercially available database transparency such as Kodak Corporation's Q60.

Digital representation 20 is device-independent in the sense that substantially the same digital representation 20 is generated by device-independent transformation unit 18, regardless of the particular characteristics of digital representation 14, and therefore, regardless of the particular idiosyncrasies of the color input device 12, which generated digital representation 14.

It is, therefore, a particular feature ofdevice-independent transformation unit 18 that it may be employed in conjunction with a wide variety of color input devices in order to provide color portable digital representations 20 of color images. Therefore, a system comprising units 16, 18 and 19 may be developed for use in conjunction with a wide variety of existing color input devices 12, such as the color input devices commercially available at the present time.

For certain relatively low quality color input devices, limitations of the color input device such as a small color gamut or low resolution or low quantization level may limit the degree of device independence which may be achieved when employing the low quality color input devices in conjunction with other color input devices. In these instances, transformation unit 18 is preferably operative to transform device-dependent digital representations generated by the low quality color input device into a digital representation which is as nearly device-independent as possible, under the limitations of the low quality color input device.

Preferably, the system of Fig. 1 also includes a display device 22 facilitating color judgements in the course of interactive work. Display device 22 is typically operative to generate an analog representation of the color image from digital representations thereof stored in digital storage unit 16.

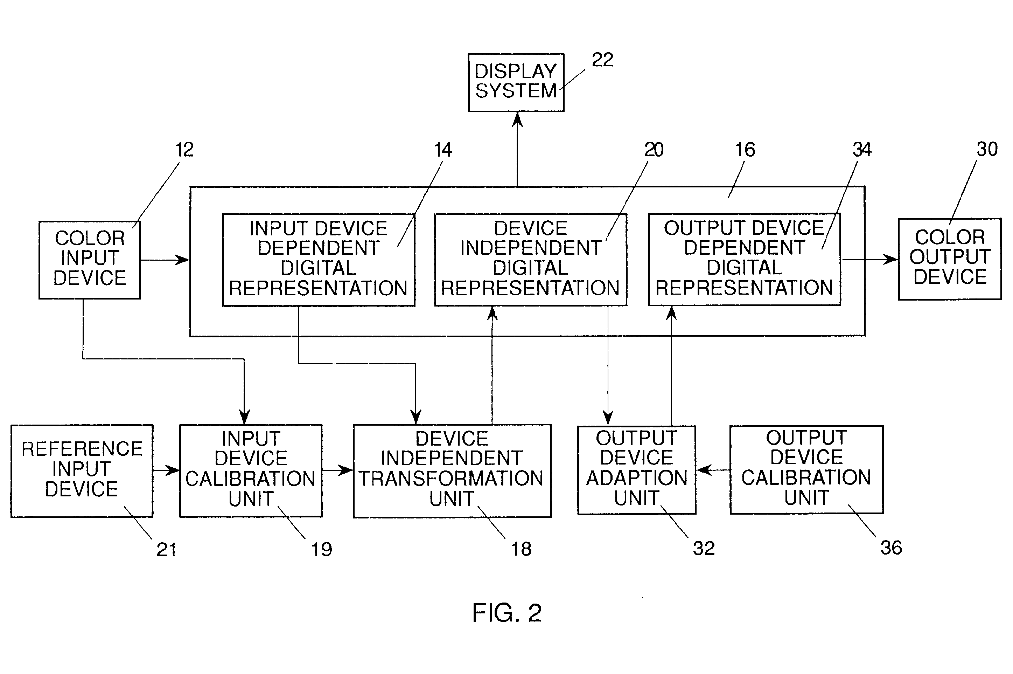

Reference is now made to the apparatus of Fig. 2 which illustrates a color reproduction system constructed and operative in accordance with an alternative embodiment of the present invention. The color reproduction system of Fig. 2 is similar to the color reproduction system of Fig. 1 except that the following components are additionally provided:
a. One or more output devices 30 such as an IRIS 4012 digital proofer and/or a Dolev PS imagesetter, commercially available from Scitex Corporation; and
b. An output device adaptation unit 32, which is operative, for each output device 30, to transform a digital representation of a color image such as digital representation 20, into an output device-dependent digital representation 34 adapted for output by the color output device 30. Preferably, the analog representation or reproduction of a color image output by color output device 30 is very similar in appearance to the original analog representation of the color image read by color input device 12. Adaptation unit 32 may be implemented using the VLSI whose netlist is appended to Published European Application No. 91300905.6.

Adaptation unit 32 is preferably characterized in that it is capable of generating a plurality of output device-dependent digital representations of a color image which, when outputted on a respective plurality of output devices, result in a respective plurality of substantially identical analog representations of the color image. Therefore, a system comprising units 16 and 32, with or without unit 18, may be developed for use in conjunction with a wide variety of existing color output devices 30, such as the color output devices commercially available at the present time.

The plurality of analog representations provided by outputting the respective plurality of output device-dependent digital representations on the plurality of output devices maynormally only be substantially identical within the limitations of the output devices themselves. In other words, if one or more of the output devices is characterized by a small color gamut or low resolution or low quantization level, the operation of adaptation unit 32 preferably results in a plurality of analog representations which are as close as possible to identical, under these limitations.

It is appreciated that since adaptation unit 32 is preferably capable of interacting with more than one output device, as explained above, adaptation unit 32 may be employed to implement display system 22. In other words, adapation unit 32 may be employed to adapt device-independent digital representation 20 to the space of a commercially available TV monitor screen such as a Barco Calibrator 7000. The result is a good quality display of the original as scanned by color input device 12.

The transformation which adaptation unit 32 applies to device-independent digital representation 20 may be generated by an output device calibration unit 36. Output device calibration unit 36 may be based upon output device calibration apparatus shown and described in Published European Application 91300904.9.

One embodiment of output device calibration apparatus, disclosed in Published European Application 91300904.9 with reference particularly to Figs. 2A-2B, generates transformations to compensate for different color output devices, such that the printed picture characteristics of tone and color are nearly identical notwithstanding which color output device is employed. Another embodiment of output device calibration apparatus, disclosed in Published European Application 91300904.9 with reference particularly to Figs. 3A - 3C, is operative to generate an analog representation on a first substrate, such as the substrate of color output device 30, which is similar to an analog representation of a color image upon a second substrate, such as the substrate bearing the original image read by color input device 12.

It is appreciated that if a system such as the system of Fig. 1 is available to provide device-independent digital representations of color images within the existing color space, then units 12, 18, 19 and 21 may be eliminated in Fig. 2.

Reference is now made to Fig. 3 which illustrates a color reproduction system which is similar to the system of Fig. 1 except that an additional color input device 50 is provided. More generally, any suitable number and variety of color input devices may be employed in the systems of Figs. 1 and 3. Color input device 50 reads an analog representation of a color image and generates a digital representation 52 thereof which is dependent on the characteristics of color input device 50, just as the digital representation 14 of a color image read by color in put device 12 is dependent on the characteristics of color input device 12.

All of the input device-dependent digital representations shown and described hereinabove may be replaced by synthetically generated digital representations which may lack an analog precursor. Synthetically generated digital representations of a color image may be dependent upon the characteristics of the system used to generate them, and the method and apparatus of the present invention may be employed to transform such synthetically generated digital representations into device-independent digital representations.

It is appreciated that provision of a device-independent digital representation of an input color image is particularly advantageous when it is desired to ensure compatability of a large plurality of color input devices which are "mixed and matched" with a large plurality of color output devices. For example, if 30 color input devices are "mixed and matched" with 32 color output devices, then due to provision of a device-independent digital representation of input color images, only 30+32=62 transformation procedures need be generated. In other words, 30 transformation procedures are required to transform the digital representations of each of the 30 input devices into device-independent representations, and 32 transformation procedures are required to transform a device-independent digital representation into each of the 32 output devices.

In contrast, the number of transformation procedures required to directly couple 30 color input devices to 32 color output devices while ensuring compatability and uniformity is 30x32=960 transformation procedures.

It is sometimes desired to replace a first color independent color space employed in an existing color independent color processing system such as the systems of Figs. 1, 2 and 3, with a second color independent color space. This may be done by constructing a transformation unit for transforming digital representations in the first color independent color space into digital representations in the second color independent color space and vice versa. Methods for doing this are explained in Published European Applications Nos. 91300904.9 and 91300905.6.

The method of replacing a first color independent color space with a second color independent color space has the advantage of requiring only a single transformation and its inverse to be computed. Then, if transformations exist "linking" each of a plurality of input devices and each of a plurality of output devices to the first color independent color space, the single transformation and its inverse may be employed in conjunction with the "linking" transformations in order to "link" the plurality of input devices and plurality of output devices to the second color independent color space. This is advantageous relative to the method of computing a large number of new transformations "linking" each of the plurality of input devices and each of the plurality of output devices to the second color independent color space.

A particular feature of the present invention is that the color independent color space need not be a customized color space particularly designed to facilitate color portability. Instead, any suitable existing color space may be employed as the color independent color space.

Preferably, an existing high end color space which is particularly adapted to generating high quality tone and color reproductions is employed as the color independent color space. This feature facilitates high quality tone and color reproduction even for "mix and match" type applications in which a color input device is employed in conjunction with an unrelated color output device. This is because the input received from the color input device, which may even be a relatively low grade device, such as a desktop color input device, is transformed into the existing color space which is known to give good results. These good results are then transformed into a format which enables them to be output by the unrelated color output device, which may even be a relatively low grade device, such as a desktop color output device.

Another particular feature of the present invention is that the color independent color space need not be psychophysical in nature and may be noncolorimetric or reference based, based upon the visual perception capabilities of a physical reading device rather than on the visual perception capabilities of the human eye. For example, the color independent colorspace may be defined such that two digital color values defined within the color independent color space differ if and only if the two colors respectively corresponding thereto can be distinguished by a particular physical reading device such as the Scitex Smart scanner. In the illustrated embodiment, the color independent color space is based upon the visual perception capabilities of the Scitex Smart Scanner, however, it is appreciated that any other suitable reading device may serve as a criterion.

The disclosures of all publications referred to in the present specification are hereby incorporated by reference.

It will be appreciated by persons skilled in the art that the present invention is not limited to what has been particularly shown and described hereinabove. Rather, the scope of the present invention is defined only by the claims that follow:

## Claims

1. A method for employing an existing color space as a color independent color space comprising the steps of:
calibrating a color transformation unit to transform a first color processing device-dependent digital representation of a color image generated by a first color processing device into a first device-independent digital representation within an existing color space; and
calibrating the color transformation unit to transform a second color processing device-dependent digital representation of the color image generated by a second color processing device into a second device-independent digital representation within the existing color space,
wherein the first and second device-independent d ig ital representations of the color image are substantially identical within the limitations of the first and second color processing devices.

2. A method for employing an existing color space as a color independent color space comprising the steps of:
calibrating a color transformation unit to transform a device-independent digital representation of a color image within an existing color space into a first output device-dependent digital representation suitable for output by a first color output device; and
calibrating the color transformation unit to transform the device-independent digital representation of the color image within the existing color space into a second output device-dependent digital representation suitable for output by a second color output device,
wherein an analog representation of the color image generated from the first output device-dependent digital representation by the first output device is substantially identical in appearance, within the limitations of the first and second output devices, to an analog representation of the color image generated from the second output device-dependent digital representation by the second output device.

3. A method for employing a noncolorimetric color space as a color independent color space comprising the steps of:
calibrating a color transformation unit to transform a first color processing device-dependent digital representation of a color image generated by a first color processing device into a first device-independent digital representation within a noncolorimetric color space; and
calibrating the color transformation unit to transform a second color processing device-dependent digital representation of the color image generated by a second color processing device into a second device-independent digital representation within the noncolorimetric color space,
wherein the first and second device-independent d ig ital representations of the color image are substantially identical, within the limitations of the first and second color processing devices.

4. A method according to claim 2 and also comprising the step of generating an analog representation of the color image from the first output device-dependent digital representation using the first output device.

5. A method for employing an existing color space to mix-and -match at least one color input device and at least one color output device comprising the steps of:
calibrating a color transformation unit to transform at least one input device-dependent digital representation of at least one color images respectively generated by the at least one color input devices respectively from a first analog representation of the at least one color images respectively into a device-independent digital representation within an existing color space; and
calibrating the color transformation unit to transform the device-independent digital representation of a color image within the existing color space into at least one output device-dependent digital representation suitable for output by the at least one color output device,
wherein at least one analog representations of the color image generated from the at least one output device-dependent digital representations respectively by the at least one output devices respectively is substantially identical in appearance to the first analog representation of the color image, within the limitations of the at least one color input device and the at least one color output device.

6. A method according to claim 5 wherein the at least one input device comprises a plurality of input devices.

7. A method according to claim 5 or claim 6 wherein the at least one output device comprises a plurality of output devices.

8. A method according to claim 1 or claim 3 and also comprising the steps of:
calibrating the color transformation unit to transform at least one of the first and second device-independent digital representation of the color image within the color space into an output device-dependent digital representation suitable for output by a color output device; and
employing the output device to generate an analog representation of the color image from the output device-dependent digital representation.

9. A method according to any of the preceding claims 1 and 5 - 8 wherein the input device comprises a desktop input device.

10. A method according to any of the preceding claims 2 and 4 - 8 wherein the output device comprises a desktop output device.

11. A method according to any of the preceding claims wherein said color image comprises any individual one of a broad spectrum of color images.

12. A method according to claim 11 wherein said color image comprises any individual one of a group of color images comprising sunstantially all color images.

13. A method according to any of the preceding claims wherein the existing color space comprises a high-end color space in which high-quality color transformations may be carried out.

14. Amethod according to claim 13 wherein the high-end color space comprises the Scitex Smart Scanner color space.

15. A method according to claim 2 or claim 4 and wherein the device-independent digital representation is provided by performing the following step:
calibrating the color transformation unit to transform an input device-dependent digital representation of a color image generated by a color input device into a device-independent digital representation within the existing color space.

16. A method according to any of the preceding claims wherein said color space comprises an industry accepted proprietary color space.

17. A method according to any of the preceding claims wherein said color space comprises a non- colorimetric color space.

18. A method for employing a noncolorimetric color space as a color independent color space comprising the steps of:
calibrating a color transformation unit to transform a device-independent digital representation of a color image within a noncolorimetric color space into a first output device-dependent digital representation suitable for output by a first color output device; and
calibrating the color transformation unit to transform the device-independent digital representation of the color image within the noncolorimetric color space into a second output device-dependent digital representation suitable for output by a second color output device,
wherein an analog representation of the color image generated from the first output device-dependent digital representation by the first output device is substantially identical in appearance, within the limitations of the first and second output devices, to an analog representation of the color image generated from the second output device-dependent digital representation by the second output device.

19. A method for employing a noncolorimetric color space to mix-and-match at least one color input device and at least one color output device comprising the steps of:
calibrating a color transformation unit to transform at least one input device-dependent digital representation of at least one color images respectively generated by the at least one color input devices respectively from a first analog representation of the at least one color images respectively into a device-independent digital representation within a noncolorimetric color space; and
calibrating the color transformation unit to transform the device-independent digital representation of a color image within the noncolorimetric color space into at least one output device-dependent digital representation suitable for output by the at least one color output device,
wherein at least one analog representations of the color image generated from the at least one output device-dependent digital representations respectively by the at least one output devices respectively are substantially identical in appearance, within the limitations of the at least one input device and the at least one output device, to the first analog representation of the color image.

20. A method for determining characteristics of a target color input device relative to a reference color input device comprising the steps of:
employing the target color input device to read an analog database, thereby to generate a first digital representation of the analog database; and
comparing the first digital representation of the analog database to a digitally stored second digital representation of the analog database,
wherein the second digital representation of the analog database was generated by employing the reference color input device to read the analog database.

21. A method for replacing a first color independent color space employed in a color independent color processing system with a second color independent color space, the color independent color processing system comprising a color transformation unit for linking a plurality of color processing devices to the first color independent color space, the method comprising the step of:
constructing a transformation for transforming digital representations of color images in an individual one of said first and second color independent color spaces into digital representations in the other one of said first and second color independent color spaces.

22. A method according to claim 1 or claim 3 wherein at least one of said first and second color processing devices comprises a color input device.

23. A method according to claim 1 or claim 3 wherein at least one of said first and second color processing devices comprises a creative device for synthetically generating digital representations of color images.

24. Apparatus for employing an existing color space as a color independent color space comprising:
a device-dependent/device-independent color manipulation unit operative to calibrate a color transformation unit so as to transform a first color processing device-dependent digital representation of a color image generated by a first color processing device into a first device-independent digital representation within an existing color space; and
a device-independent/device-dependent color manipulation unit operative to calibrate the color transformation u nit so as to transform a second color processing device-dependent digital representation of the color image generated by a second color processing device into a second device-independent digital representation within the existing color space,
wherein the first and second device-independent d ig ital representations of the color image are substantially identical, within the limitations of the first and second color processing devices.

25. Apparatus for employing an existing color space as a color independent color space comprising:
a first device-independent/device-dependent color manipulation unit operative to calibrate a color transformation unit so as to transform a device-independent digital representation of a color image within an existing color space into a first output device-dependent digital representation suitable for output by a first color output device; and
a second device-independent/device-dependent color manipulation unit operative to calibrate the color transformation unit so as to transform the device-independent digital representation of the color image within the existing color space into a second output device-dependent digital representation suitable for output by a second color output device,
wherein an analog representation of the color image generated from the first output device-dependent digital representation by the first output device is substantially identical in appearance, within the limitations of the first and second output devices, to an analog representation of the color image generated from the second output device-dependent digital representation by the second output device.

26. Apparatus for employing a noncolorimetric color space as a color independent color space comprising:
a first device-dependent/device-independent color manipulation unit operative to calibrate a color transformation unit so as to transform a first color processing device-dependent digital representation of a color image generated by a first color processing device into a first device-independent digital representation within a noncolorimetric color space; and
a second device-dependent/device-independent color manipulation unit operative to calibrate the color transformation unit so as to transform a second color processing device-dependent digital representation of the color image generated by a second color processing device into a second device-independent digital representation within the noncolorimetric color space,
wherein the first and second device-independent digital representations of the color image are substantially identical, within the limitations of the first and second color processing devices.

27. Apparatus for employing an existing color space to mix-and-match at least one color input device and at least one color output device, the apparatus comprising:
a device-dependent/device-independent color manipulation unit operative to calibrate a color transformation unit so as to transform at least one input device-dependent digital representation of at least one color images respectively generated by the at least one color input devices respectively from a first analog representation of the at least one color images respectively into a device-independent digital representation within the existing color space; and
a device-independent/device-dependent color manipulation unit operative to calibrate the color transformation unit so as to transform the device-independent digital representation of a color image within the existing colorspace into at least one output device-dependent digital representation suitable for output by the at least one color output device,
wherein at least one analog representations of the color image generated from the at least one output device-dependent digital representations respectively by the at least one output devices respectively is substantially identical in appearance, within the limitations of the at least one input device and the at least one output device, to t he first analog representation of the color image.

28. Apparatus for employing a noncolorimetric color space as a color independent color space comprising:
a first device-independent/device-dependent color manipulation unit operative to calibrate a color transformation unit so as to transform a device-independent digital representation of a color image within a noncolorimetric color space into a first output device-dependent digital representation suitable for output by a first color output device; and
a second device-independent/device-dependent color manipulation unit operative to calibrate the color transformation unit so as to transform the device-independent digital representation of the color image within the noncolorimetric color space into a second output device-dependent digital representation suitable for output by a second color output device,
wherein an analog representation of the color image generated from the first output device-dependent digital representation by the first output device is substantially identical in appearance, within the limitations of the first and second output devices, to an analog representation of the color image generated from the second output device-dependent digital representation by the second output device.

29. Apparatus for employing a noncolorimetric color space to mix-and-match at least one color input device and at least one color output device, the apparatus comprising:
a device-dependent/device-independent color manipulation unit operative to calibrate a color transformation unit so as to transform at least one input device-dependent digital representation of at least one color images respectively generated by the at least one color input devices respectively from a first analog representation of the at least one color images respectively into a device-independent digital representation within a noncolorimetric color space; and
a device-independent/device-dependent color manipulation unit operative to calibrate the color transformation unit so as to transform the device-independent digital representation of a color image within the noncolorimetric color space into at least one output device-dependent digital representation suitable for output by the at least one color output device,
wherein at least one analog representations of the color image generated from the at least one output device-dependent digital representations respectively by the at least one output devices respectively is substantially identical in appearance, within the limitations of the at least one color input device and the at least one color output device, to the first analog representation of the color image.

30. Apparatus for determining characteristics of a target color input device relative to a reference color input device comprising:
a digital comparing unit operative to compare a first digital representation of the analog database, generated by the target color input device, to a digitally stored second digital representation of the analog database, generated by employing the reference color input device to read the analog database.

31. Apparatus for replacing a first color independent color space employed in a color independent color processing system with a second color independent color space, the color independent color processing system comprising a color transformation unit for linking a plurality of color processing devices to the first color independent color space, the apparatus comprising:
a device-independent/device-independent transformation unit operative to construct a transformation which transforms digital representations of color images in an individual one of said first and second color independent color spaces into digital representations in the other one of said first and second color independent color spaces.

32. A method according to claim 1 or claim 3 wherein said first step of calibrating comprises the step of storing a first transformation for transforming the first device-dependent digital representation and the second step of calibrating comprises the step of additionally storing a second transformation for transforming the second device-dependent digital representation.

33. A method according to claim 2 or claim 18 wherein said first step of calibrating comprises the step of storing a first transformation for transforming into the first output device-dependent digital representation and the second step of calibrating comprises the step of also storing a second transformation for transforming into the second output device-dependent digital representation.

34. A method according to claim 5 or claim 19 wherein said first step of calibrating comprises the step of storing a first transformation for transforming the input device-dependent digital representation and the second step of calibrating comprises the step of additionally storing a second transformation for transforming the device-independent digital representation.

35. A method according to any of claims 32 - 34 wherein said steps of storing each comprise the step of storing a transformation as a LUT.

36. A method according to any of claims 1, 3 and 32 wherein the color transformation unit is operative to transform a plurality of second color processing device-dependent digital representations of the color image generated respectively by a corresponding plurality of second color processing devices into a plurality of second device-independent digital representations within the color space, respectively, which are all substantially identical to the first device-independent digital representation within the limitations of the color processing devices.

37. A method according to any of claims 2, 18 and 33 wherein the color transformation is operative to transform the device-independent representation into a plurality of second output device-dependent digital representations suitable for output by a corresponding plurality of second output devices,
and wherein the analog representations generated from the plurality of second output device-dependent digital representations by the corresponding plurality of second output devices respectively are each substantially identical in appearance to the analog representation generated from the first output device-dependent digital representation by the first output device, within the limitations of the output devices.

38. A method according to any of claims 5, 19 and 34 wherein the at least one device-dependent digital representation comprises a plurality of device-dependent digital representations, the at least one color input device comprises a plurality of color input devices and the at least one color output device comprises a plurality of color output devices.
